# EUROPEAN PATENT SPECIFICATION

(11) **EP 0 621 595 B1**
(45) Date of publication and mention of the grant of the patent: **18.11.1998**
(21) Application number: 94302930.6
(22) Date of filing: 25.04.1994
(51) Int. Cl.: G11B 19/28

(54) **Phase locking a disk drive spindle to a reference signal**
Plattenantriebspindelphasenverriegelung an ein Referenzpignal
Verrouillage de la phase d'un axe d'entraînement de disque à un signal de référence

(30) Priority: 23.04.1993 US 54657; 23.04.1993 US 54652
(43) Date of publication of application: 26.10.1994
(73) Proprietor: QUANTUM CORPORATION, Milpitas California 95035 (US)
(72) Inventor: Even, William F., Massachusetts 01501-2613 (US); Lewis, William D., Northboro, Massachusetts 01532 (US)
(74) Representative: Maggs, Michael Norman

(56) References cited:
- EP-A- 0 094 492
- EP-A- 0 404 120
- EP-A- 0 426 483
- US-A- 4 815 063
- US-A- 4 907 105
- PATENT ABSTRACTS OF JAPAN vol. 17, no. 141 (P-1506) 23 March 1993 & JP-A-04 313 859 (NEC IBARAKI) 5 November 1992
- PATENT ABSTRACTS OF JAPAN vol. 17, no. 182 (P-1518) 8 April 1993 & JP-A-04 335 255 (MITSUBISHI DENKI K.K.) 24 November 1992

## Description

### Field of the Invention

The invention relates to the field of disk drives for data processing systems, and in particular to the synchronization and phase locking of multiple disk drive spindles.

### Background of the Invention

Data storage systems often utilize several storage devices such as hard magnetic disk drives to provide adequate permanent data storage capacity. Each hard disk drive incorporates a multiple-disk stack mounted on a spindle and driven by a motor operated at a predetermined rotational speed; this arrangement is commonly referred to as a spindle-disk assembly or SDA. Data transfer to and from each disk drive is effected by means of a plurality of read/write transducers, such as magnetic read/write heads, each one of which is associated with a disk surface and is mounted on a common actuator mechanism. Each disk drive also typically has an associated spindle motor speed control circuit to maintain the rotational speed of the SDA within predetermined limits. 3600 RPM is a common rotational speed, but the trend is toward higher RPMs in order to increase the rate at which data can be read from or written to the disk drive.

When a number of independent disk drives are employed in a storage system, it is advantageous to synchronize their operation. In particular, it is advantageous to have precise phase alignment between disks in different drives in order to minimize unnecessary delays when switching from a disk in one drive a disk in another. This need for synchronism requires a higher degree of rotational control than is achieved by a set of independent speed controllers.

One known technique for achieving synchronous operation is to phase-lock the rotation of each disk drive to a single master reference signal. For example, it is possible to phase-lock a feedback signal indicative of spindle position to the master reference signal, and thereby phase-lock the spindle to the master reference signal. Such a scheme without further modification has only coarse phase-alignment resolution, because generally the feedback signal only indicates spindle position to the nearest rotor pole. Also, it still requires some way of aligning the information on the disk with the spindle, so that phase-aligning the spindles results in phase-aligned disks. This requirement burdens the manufacturing step of "servowriting", i.e., writing servo-mechanism-related information to the disk, in at least two ways: 1) the servowriter must somehow track the spindle motor rotation to ensure that the position information is aligned with the spindle; and 2) the servowriter and final product are constrained to use similar if not identical spindle controller hardware, which may be disadvantageous under some circumstances.

Another technique for achieving synchronous operation is to phase-lock the master reference signal with a disk-position signal that is derived from a pattern recorded on a disk in the disk drive. Because this technique relies on a disk-position signal rather than a spindle-position signal, it overcomes the above-mentioned problems of using spindle alignment. However, it also requires the continuous presence of the disk-position signal. In so-called "dedicated servo" systems, which have a dedicated disk surface for providing disk-position information, this requirement is not a problem. However, in modern "embedded-servo" systems, which obtain position information from data surfaces rather than a dedicated surface, the disk-position signal is occasionally interrupted, for example during head switches. After an interruption, the drive must re-acquire phase lock before disk accessing can continue, resulting in undesirable delay.

One example of synchronizing multiple disk spindles is shown in U.S. Patent 5,276,569, entitled "Disk Storage System", inventor Even, assigned to Digital Equipment Corp. That system employs a modified version of the disk-position feedback system described above. It includes a trigger pulse modifier as part of the phase lock servomechanism. During startup operation of the disk drive, the trigger pulse modifier measures the phase difference between the master reference signal and a sector zero reference pulse generated from a reference pattern recorded on the disk. This phase difference is applied to a lookup table, the output of which is an integer indicating a number of cycles of phase shift to be applied to a sensor signal generated by sensors on the spindle. The phase-shifted signal is then applied, after suitable frequency division, as a feedback signal to a phase difference detector in the loop.

This system has the advantage of taking disk position into account during phase locking. And since the pulse modification only takes place during the startup phase, it does not rely on continuous disk position information. However, like the spindle-lock scheme it requires that the reference pattern must be aligned with the spindle, and also that the servowriter and final product use a similar controller. An improved technique, therefore, would achieve similar beneficial results while eliminating or substantially reducing these constraints, thereby simplifying the servowriting process and providing greater design flexibility.

US 4,815,063 relates to a disc motor control circuit in which the rotational speed of the disc motor is controlled by switching between an auto frequency control and a phase locked loop. A timing window is established at a point at which a synchronising signal is expected and signals occurring outside that window are discarded, reducing the risk of noise-related error.

EP 0426483 relates to a multiple disc system in which slave disc drives are synchronised to an index signal of a master disc drive by staggering the phase of sequential drives.

### SUMMARY OF THE INVENTION

The present invention is intended to address the problems discussed above as well as other more generic problems. In particular, the present invention has several objectives, including the following:
i) to synchronise the operation of multiple disk drives without imposing any predetermined limit on the number of disk drives allowed, thus enhancing scalability of the storage system;
ii) to achieve phase locking of the disk drives using digital hardware already required for speed control;
iii) to simplify the servowriting process, and to allow a servowriter to use different spindle control electronics than those in a final product;
iv) to avoid degrading operational characteristics such as availability and performance; and
v) to enhance the testability of the disk drives.

The invention in its broad form resides in a method of phase locking the rotation of a spindle as recited in claim 1. The invention also resides in a spindle controller as recited in claim 5.

As described hereinafter, circuitry in each disk drive determines during startup the phase offset between its disks and a single master reference signal that is common to all disk drives, and then adjusts the phase of its spindle relative to the master reference signal to attain fine-grain phase alignment. Phase offset is determined by sampling the phase of the master reference signal when the disk is in a predetermined position. The spindle-disk assembly provides separate indications of spindle and disk positions to synchronization and phase-locking subsystems.

Because the spindle and disk positions are independently indicated, the synchronization technique can determine an arbitrary phase offset between the spindle and servo information written on the disk. The invention further includes means for adjusting the spindle phase by very small increments. This feature obviates the necessity of precise servowriting during manufacturing, and also gives rise to the possibility of completely re-formatting (without re-servowriting) a disk in the field without requiring special tools or instruments.

A spindle reference signal is created for each disk drive, each signal having an adjustable phase offset relative to the master reference signal. In this way, each disk drive has its own independent sub-master reference so that the distributed synchronization technique can be carried out. Furthermore, in a preferred embodiment the hardware in all disk drives is the same; programmable features in the hardware enable a disk drive to operate as either a master or a slave. The hardware is designed to provide dual functions and to operate as "one of many", rather than performing only a single-function (i.e., master or slave) and/or operating as one of a predetermined number. One software-configurable hardware design both minimizes costs and enhances scalability.

Another aspect of the current invention is a phase-locking technique that switches between frequencies that are higher and lower than the nominal frequency of the phase reference, and relies on phase coincidence detection to maintain phase lock. The switching frequencies may be programmable, and can be selected to fall within the operating frequency range of the spindle. This phase-locking technique is implemented in firmware and makes use of hardware commonly used merely to achieve spindle speed control.

The phase-locking technique leads to several advantages. Because the disk drive can operate at only one of two programmable frequencies both within its operating range, the disk drive can continue to operate properly even if the spindle reference signal were not present or became noisy or erratic. Therefore, there is no need for a standby phase reference if such a situation should occur, or for any apparatus to detect such a condition and switch over to such a standby. Furthermore, normal disk data transactions can occur during the synchronization process, because the disk is always operating within its specified rotational speed range.

Finally, apparatus in accordance with the invention also employs diagnostic features to enable detection of faulty signals and components, thus enhancing the testability of the disk drive.

### Brief Description of the Drawings

An exemplary embodiment of the invention will be described with reference to the accompanying drawings, in which:
Figure **1** is a block diagram of a disk storage system having multiple disk drives according to the principles of the invention;
Figure **2** is a block diagram of one of the disk drives of Figure **1**;
Figure **3** is a block diagram of a spindle synchronizer within the disk drive of Figure **2**;
Figure **4** is a timing diagram of signals generated and used by the spindle synchronizer of Figure **3**;
Figure **5** is a timing diagram of signals generated and used by the spindle synchronizer of Figure **3**;
Figure **6** is a timing diagram of signals generated and used by the spindle synchronizer of Figure **3**;
Figure **7** is a block diagram of a spindle controller within the disk drive of Figure **2**;
Figure **8** is a flow diagram showing the frequency-locking operation of the spindle controller of Figure **7**;
Figure **9** is a flow diagram showing the phase-locking operation of the spindle controller of Figure **7**;
Figure **10** is a diagram showing the range of operating frequencies of various components and signals within the disk drive of Figure **2**; and
Figure **11** is a timing diagram of signals within the spindle controller of Figure **7**.

### Description of the Preferred Embodiment

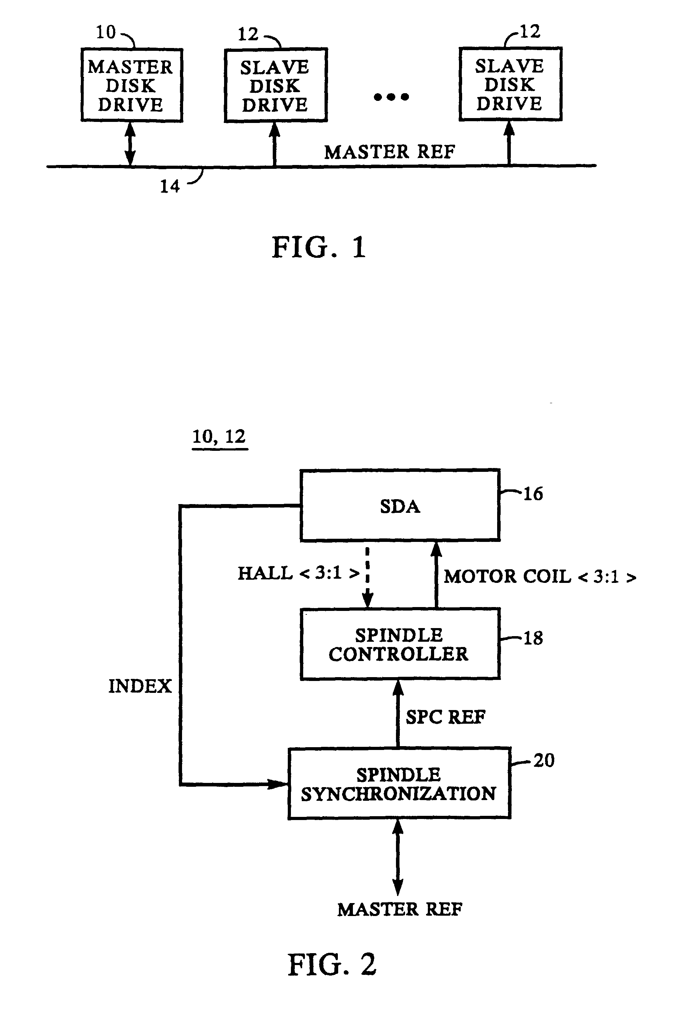

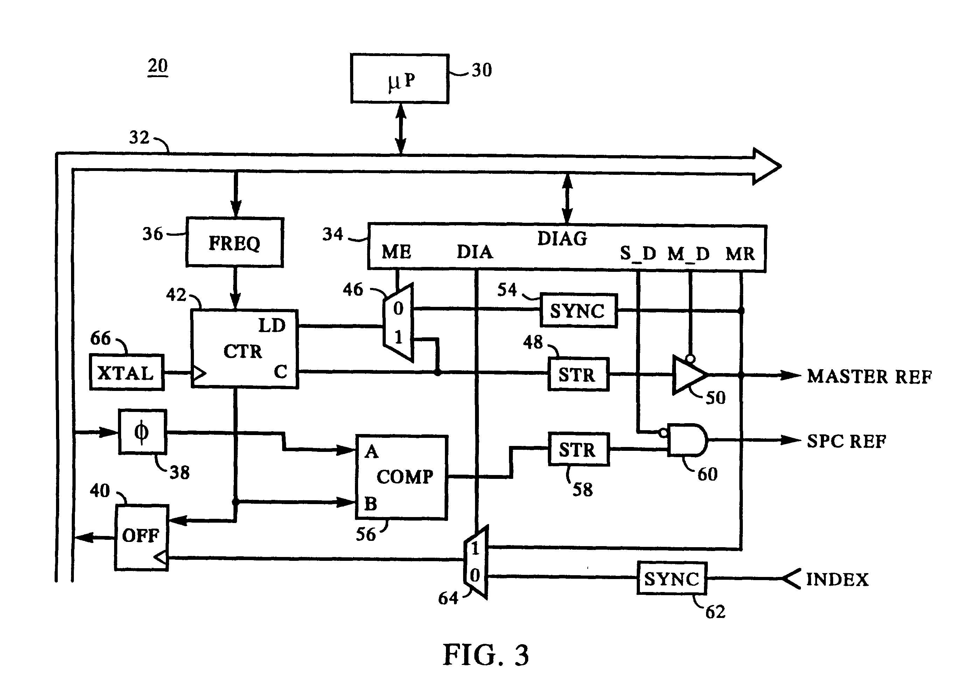

Figure **1** shows a disk storage system consisting of multiple independent disk drives, configured as a master disk drive **10** and a number of slave disk drives **12**. In the illustrated embodiment the master disk drive **10** is identical in construction to each slave disk drive **12**, but is configured slightly differently via software in a manner described below with reference to Figure **3.** As shown, all of the disk drives **10**, **12** are connected to a wire **14** carrying a signal called MASTER REF. The signal MASTER REF is a master phase reference signal used to synchronize the operation of the disk drives **10, 12**. As shown, the master disk drive **10** both transmits and receives the signal MASTER REF, whereas the slave disk drives **12** only receive it.

Figure **2** shows the drives **10**, **12** in more detail. Each drive has a spindle-disk assembly (SDA) **16** having a conventional 3-phase DC spindle motor with one or more annular disks mounted thereon; a spindle controller **18** to control the rotation of the SDA **16**; and a spindle synchronizer **20** that is responsible for synchronizing the rotation of the SDA **16** with the signal MASTER REF. As shown, the spindle synchronizer **20** provides a signal SPC REF to the spindle controller **18**, and receives a signal INDEX from the SDA **16**. The spindle controller **18** provides current to the spindle on the wires labelled MOTOR COIL<3:1>. And in some embodiments, there may be a set of signals HALL<3:1> generated within the SDA **16** and sent to the spindle controller **18**. These signals, if present, are generated by conventional Hall-effect sensors located on the spindle within the SDA **16** to provide rotational position feedback to the spindle controller **18**.

The signal SPC REF is a spindle phase reference signal to which the spindle controller **18** phase-locks the SDA **16**. The signal SPC REF is derived from the signal MASTER REF; its generation is described in detail below.

The signal INDEX is a pulse waveform, each pulse occurring once per rotation of the SDA **16** when it is in a predetermined rotational position. In the illustrated embodiment, the INDEX pulse is generated when a synchronization pattern that is recorded in a predetermined location on a disk within the SDA **16** passes under a readback head located within the SDA **16**. In alternative embodiments, INDEX could be generated in response to different recorded information, or by a sensor that detects when the disk is in a predetermined rotational position.

As will be shown, the periods of the signals MASTER REF and SPC REF are programmable within a range of 5-20 milliseconds (ms). In the illustrated embodiment, their periods are programmed to be 11.111 ms, which corresponds to a rotational period of 90 Hz. Also, in the illustrated embodiment the pulse width of the signal SPC REF is in the range of 200-260 microseconds (us), and that of signal MASTER REF is in the range of 5-30 µs.

Figure **3** shows the spindle synchronizer **20** of Figure **2** in greater detail. As shown, the spindle synchronizer **20** contains a conventional microprocessor **30** connected to a data bus **32**, to which are connected several other components: a 5-bit diagnostic and control register **34**, a 16-bit frequency register **36**, a 16-bit phase register **38**, and a 16-bit offset register **40**. A 16-bit up-counter **42** is loaded once per revolution from the frequency register **36**. The carry output from the counter **42** goes to one input of a multiplexer (mux) **46** and also to a pulse stretcher **48**, whose output goes to a driver **50**. The output of the driver **50** is connected to the wire carrying the signal MASTER REF of Figure **2.** The signal MASTER REF also passes through a conventional dual-ranked synchronizer **54** on its way to the other input of the mux **46**, whose output goes to the load enable input of the counter **42.**

The output from the counter **42** is provided to the inputs of the offset register **40** and a 16-bit comparator **56**. The other input to the comparator **56** is from the phase register **38**. The output of the comparator **56** goes to another pulse stretcher **58**, whose output goes to an AND gate **60**. The output of the AND gate **60** is the signal SPC REF of Figure **2**. The signal INDEX of Figure **2** goes through another dual-ranked synchronizer **62**, whose output goes to one input of a mux **64**. The other input to the mux **64** is the signal MASTER REF; the output of the mux **64** is routed to the clock input of the offset register **40**.

The following elements in Figure **3** are clocked by 2.5 MHz crystal clock, not shown in Figure **3**: the counter **42,** the synchronizers **54** and **62**, and the pulse stretchers **48** and **58**. This clock is the time base for the operation of the circuit shown in Figure **3**. Alternative embodiments may employ clocks having different frequencies; in such embodiments, some of the register values to be described may differ from those used in the illustrated embodiment in a way that will be apparent to those skilled in the art.

The pulse stretchers **48, 58** are of conventional design, and operate to provide the necessary pulse widths, already described, for the signals MASTER REF and SPC REF.

The diagnostic and control register **34** has 5 bits used to control and monitor the spindle synchronizer **20**. The following table gives the names, functions, and accessibility from the bus **32** of the diagnostic bits:

| # | Name | Acc. | Function |
|---|---|---|---|
| 0 | MR | R | MASTER REF input state. Allows uP to determine current state of signal MASTER REF. |
| 1 | ME | R/W | MASTER ENABLE. When set to "ONE" counter operates independently. When set to "ZERO", counter loading controlled by signal MASTER REF. |
| 2 | M_D | R/W | MASTER REF OUTPUT DISABLE. When set to "ONE", driver does not drive MASTER REF. When set to "ZERO", driver does drive MASTER REF. |
| 3 | S_D | R/W | SPC REF OUTPUT DISABLE. When set to "ONE", AND gate does not drive SPC REF. When set to "ZERO", AND gate does drive SPC REF. |
| 4 | DIA | R/W | DIAGNOSTIC MODE. When set to "ONE", offset register clocked by MASTER REF. When set to "ZERO", offset register clocked by signal INDEX. |

The non-diagnostic operation of the spindle synchronizer **20** will now be described; for such operation, the DIA bit in the diagnostic and control register **34** is "ZERO". To begin with, the microprocessor **30** initializes the frequency register **36** and phase register **38**. The values stored in these registers will be referred to as FREQ and PHASE, respectively.

For 90 Hz operation, the counter **42** must have a period of 11.111 ms, which corresponds to 27,778 periods of the 2.5 MHz clock. Since the counter **42** is an up counter, it counts from FREQ up to 65,536 (2¹⁶); therefore FREQ is set to 65,536 - 27,778 = 37758.

The value in the phase register **38**, PHASE, can generally be anywhere in the count range of the counter **42** (i.e., between FREQ and 65,535). However, its value must be sufficiently less than 65,535 to ensure proper operation despite normal frequency differences between the local clock and the clock that generates the signal MASTER REF. The maximum safe value for the phase register **38** is called MAX, and it can be determined based on the relative tolerance between the local clock and the clock that generates the signal MASTER REF. For example, consider a case where the relative tolerance is 0.02%. This tolerance translates to an uncertainty of +/- 14 counts; in such a case, then, MAX is 65,536 - 14 = 65,522. Clearly other values of MAX are possible for other clock tolerances.

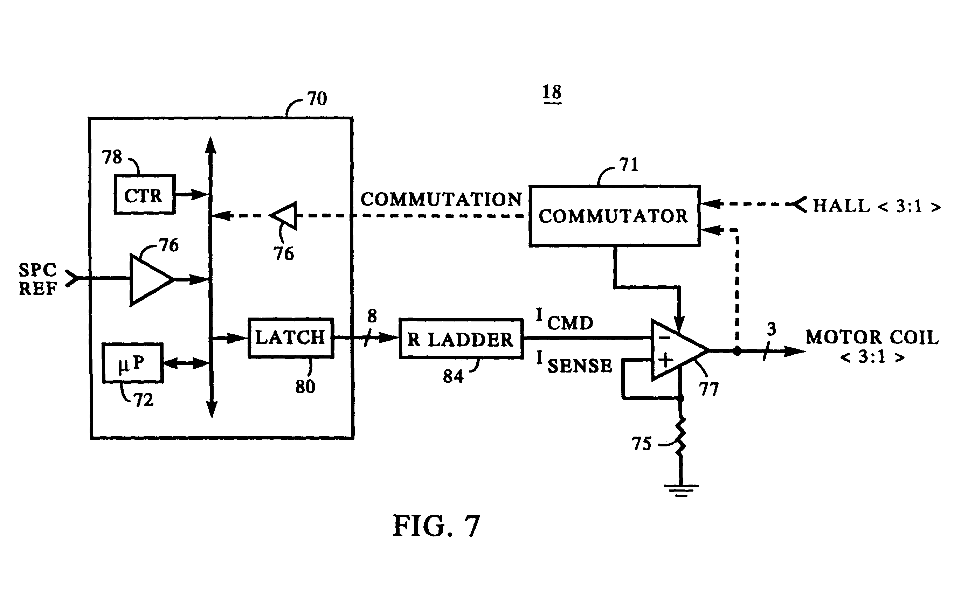

The comparator **56** provides a pulse when the value in the counter **42** matches the value in the phase register **38**; this pulse passes through the pulse stretcher **58** and the AND gate **60** to generate a pulse in the signal SPC REF. The signal SPC REF, therefore, has the same frequency as MASTER REF, but has an initial phase offset therefrom, the initial phase offset being determined by the value in the phase register **38**. The spindle controller **18** of Figure **2** phase locks to the signal SPC REF in a manner described in more detail below with reference to Figures 7-10. The microprocessor **30** waits for this phase locking to occur before taking additional steps. The microprocessor **30** can monitor the value in the OFFSET register **40** to determine when phase lock has been achieved; it is indicated when the value is no longer changing by more than some predetermined small amount, such as +/- 2 counts.

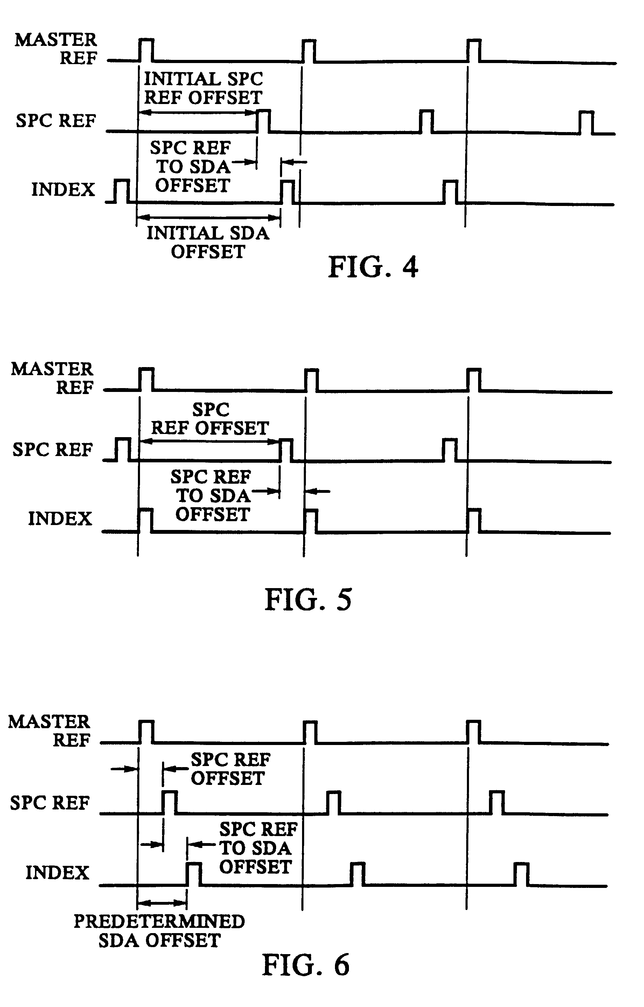

When phase lock has occurred, the SDA **16** of Figure **2** has an initial rotational phase offset from the signal MASTER REF that in general differs from the initial phase offset of the signal SPC REF. An example of this situation is shown in Figure **4**, where the signal INDEX indicates a predetermined rotational position of the SDA **16**. The difference between these two initial phase offsets is the phase offset between SPC REF and the SDA. This "SPC REF to SDA offset" does not change substantially after the SDA **16** has phase locked to the signal SPC REF.

After phase lock has occurred, then, the value in the offset register **40** of Figure **3** (called OFFSET) represents the initial SDA rotational offset. The microprocessor uses this value to compute a new PHASE value to phase-align the SDA **16** with the signal MASTER REF. This computation proceeds as follows:
(1) PHASE is subtracted from OFFSET to yield a number called RESULT.
(2) If RESULT is between FREQ and MAX, then PHASE is set equal to RESULT.
(3) Otherwise, PHASE is set equal to [65,536 + RESULT - FREQ]. This number may need rounding to either MAX or FREQ.

This action has the effect of shifting the signal SPC REF relative to the signal MASTER REF. When the spindle controller **18** re-acquires phase lock, the SDA rotation (as indicated by the signal INDEX) is phase-aligned with the signal MASTER REF, as shown in Figure **5**.

Although Figure **5** shows precise phase alignment between the signal INDEX and the signal MASTER REF, in some cases it may be advantageous to have a predetermined non-zero phase offset between them. For example, if the disk drives **10**, **12** are accessed sequentially for data during operation, it may be beneficial to have them offset from each other by approximately the duration of a single access, so that no time is lost waiting for proper disk positioning between accesses. An example of a non-zero offset is shown in Figure **6**. Such a non-zero predetermined phase offset can be achieved by modifying step (1) above as follows:
(1) PHASE is subtracted from (OFFSET + predetermined phase offset) to yield RESULT.

While in the illustrated embodiment the signals MASTER REF and SPC REF have the same frequency, it will be clear to one skilled in the art that the frequency of the signal MASTER REF may be a multiple of the frequency of the signal SPC REF in alternative embodiments that employ a frequency divider or similar means of deriving the signal SPC REF from the signal MASTER REF.

Similarly, although in Figure **3** an AND gate **60** is used to couple the output of the comparator **56** to the SPC REF output of the spindle synchronizer **20**, this coupling may be achieved by other means in alternative embodiments. For example, a simple driver may be used if the AND function is not required. If the loading on the signal SPC REF is sufficiently small, the output of the comparator **56** may itself be used to drive the signal SPC REF.

The diagnostic and control features of the spindle synchronizer **20** of Figure **3** will now be described. The MR bit in the diagnostic register **34** allows the microprocessor to determine the state of the signal MASTER REF. This capability is useful for testing the circuitry associated with the signal MASTER REF, such as the driver **50** and the wire **14** of Figure **1**. Also, it allows the microprocessor **30** to determine approximately when a transition of the signal MASTER REF occurs, and therefore to roughly synchronize its operation with the rest of the spindle synchronizer **20**. Such rough synchronization enables the microprocessor **30** to do things at the appropriate times. For example, the microprocessor **30** should not load the phase register **38** near a transition of the signal SPC REF. It should also read the offset register **40** only when its contents are stable, i.e., not near a transition of the signal INDEX, which by clocking the offset register **40** may change its contents.

The ME bit in the diagnostic register **34** controls whether the counter **42** counts independently or is reloaded by the signal MASTER REF, which may be driven by another disk drive. This bit is set to "ONE" in a master disk drive **10**, and typically is a "ZERO" in a slave disk drive **12**. However, this bit can be set to "ONE" whenever independent counting is desired, for example during diagnostic testing or when the signal MASTER REF is not functioning properly.

The M_D bit controls the driver **50** used to drive the signal MASTER REF. This bit is programmed to "ZERO" in a master disk drive **10**, and to "ONE" in a slave disk drive **12**.

The DIA bit in the diagnostic register **34** controls the clock to the offset register **40**. When DIA is a "ZERO" (i.e., normal, non-diagnostic operation), the synchronized version of the signal INDEX clocks the offset register **40**. When DIA is a "ONE", the signal MASTER REF clocks the offset register **40**. Therefore the offset between the counter **42** and the incoming signal MASTER REF can be monitored. This feature allows the microprocessor **30** to determine if the incoming signal MASTER REF is operating properly.

Turning now to Figure **7**, the spindle controller **18** of Figure **2** is shown in greater detail. The circuitry shown in Figure **7** controls the rotational frequency of the SDA **16** and also phase-locks the SDA **16** to the signal SPC REF. A microcontroller **70** and resistor ladder **84** provide a voltage signal ICMD that indicates the desired spindle current. Transconductance amplifiers **77** provide the current signals MOTOR COIL<3:1> that drive the spindle. A conventional commutator **71** controls the switching of the amplifiers **77**. The current in the final stage of the amplifiers **77** is sensed as a voltage signal ISENSE developed across a sense resistor **75**, which is fed back to the input of the amplifiers **77** to control their drive strength.

The commutator **71** can be either of two broad types, sensorless or sensored. A sensored commutator obtains positional feedback via the signals HALL<3:1> output by Hall-effect devices if present within the SDA **16** of Figure **2.** A sensorless controller monitors the back-EMF voltage appearing on signals MOTOR COIL<3:1> in order to obtain positional feedback. In one embodiment, a sensorless commutator **71** and portions of the amplifiers **77** are contained in the ML4410 Sensorless Spindle Motor Controller available from Micro Linear Corp. This IC provides an output labelled COMMUTATION in Figure **7** that indicates the occurrence of each commutation. The function of the commutator **71** may also be carried out by the microcontroller **70**, in which case it receives the signals HALL<3:1> to derive position information.

Within the microcontroller **70**, a microprocessor **72** is connected via a bus **74** to input buffers **76**, a 16-bit counter **78**, and an 8-bit latch **80**. Input buffers **76** receive the signal SPC REF of Figure **2** and COMMUTATION if necessary. In the illustrated embodiment, the counter **78** is a free-running down counter, i.e., it repetitively counts from 2¹⁶ down to 0. The latch **80** is connected to the resistor ladder network **84** to implement a digital-to-analog converter (DAC). Alternative embodiments may of course employ an integrated DAC in the place of the latch **80** and ladder network **84**.

The input buffers **76** allow the microprocessor **72** to sample or poll the state of the signals SPC REF and COMMUTATION. It will be appreciated that in alternative embodiments these signals could instead be used to interrupt the microprocessor **72** so that their state may be monitored.

In the illustrated embodiment, both the microprocessor **72** and the counter **78** are clocked by a crystal clock, not shown, having a frequency of 1 MHz and a tolerance of 0.01%. In alternative embodiments these components could be clocked by different clocks if suitable synchronization is provided. Also, clocks having different frequencies and tolerances may be employed with suitable modification of the operation of the microcontroller **70** that will be apparent to those skilled in the art.

A preferred microcontroller **70** is a COP 820 microcontroller manufactured by the National Semiconductor Co. However, there may be alternative embodiments apparent to those skilled in the art that employ different microcontrollers or perhaps use discrete components. Also, although the microcontroller **70** and commutator **71** are shown as separate components, their physical implementation may overlap without affecting the principles of the invention set forth herein.

The operation of the circuitry of Figure **7** will be described for sensorless applications, i.e., those applications wherein the signal COMMUTATION is provided to the microcontroller **70**. This description will be equally applicable to the sensored application, except that in the sensored application the microcontroller **70** monitors the signals HALL<3:1> instead of COMMUTATION to track the rotation of the spindle.

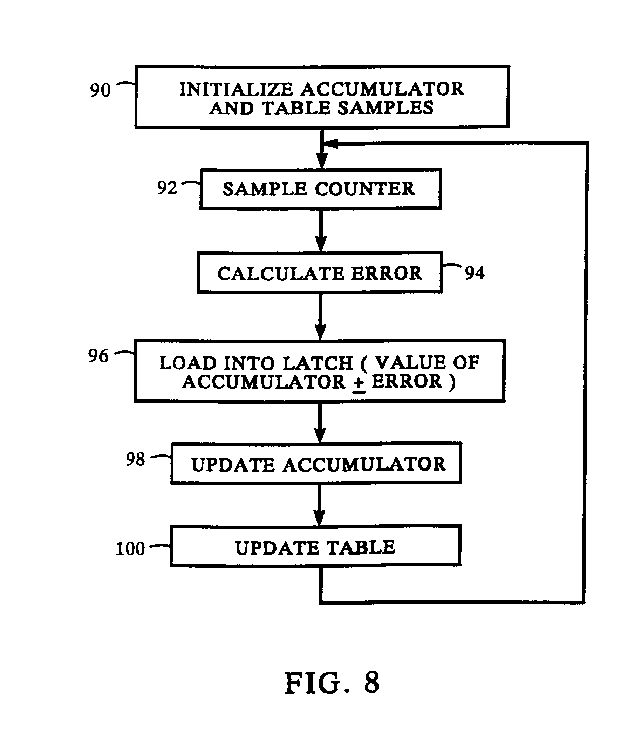

The microprocessor **72** counts transitions of the signal COMMUTATION to track the actual rotation of the SDA **16**. In the illustrated embodiment, there are 24 commutations per revolution; there may be a different number of commutations in alternative embodiments. The microprocessor **72** also maintains a table of samples of the free-running counter **78**, where each entry in the table corresponds to one of the 24 commutations. The microprocessor **72** also maintains a 16-bit accumulator variable that functions as an integrating loop filter. The use of both the table and the accumulator are described in greater detail with reference to Figure **8** below.

Figure **8** shows the steps carried out by the microprocessor **72** to control the rotational frequency of the SDA **16**. In step **90**, the accumulator and the table of counter samples are initialized. The accumulator is initialized by setting its low byte to zero, and its high byte to an initial value that corresponds to the approximate amount of current required from the amplifier **78** to overcome the frictional torque of the SDA **16**. In other words, this initial value is sufficient to drive the SDA **16** at approximately the desired speed even in the absence of any finer control. This initial value is best determined empirically for any particular embodiment of the present invention. Additionally, initialization of the accumulator helps to minimize the amplitude of normal settling transients.

It should be noted that alternative embodiments may not require the initialization of the accumulator to a non-zero value as described above. Within the COP 820, however, the microprocessor **72** has only 8 bits of mathematical precision, and therefore has more limited calculating range than, say, a 16- or 32-bit microprocessor. When an 8-bit microprocessor is used, initializing the accumulator to a non-zero value results in less likelihood of mathematical underflow or overflow during steady-state operation. If a 16- or 32-bit microprocessor is used, the calculating range may be sufficiently wide to obviate this initialization step.

The table of counter samples is initialized by sampling the counter **78** upon each of the 24 positive transitions of the signal COMMUTATION in a revolution. This initialization provides a set of time stamps that are subsequently used to monitor the rotational period of the SDA **16**.

Steps **92** through **100** are then repeated for every positive transition of the signal COMMUTATION. The microprocessor **72** knows when each revolution of the SDA **16** is complete by counting 24 positive transitions of the signal COMMUTATION.

In step **92**, the counter **78** is sampled to obtain the time stamp for the present commutation.

In step **94**, the error in the rotational period is calculated as follows:
(i) The current sample is subtracted from the table entry corresponding to the present commutation. This difference represents the actual number of crystal clock periods between the present commutation and the same commutation one revolution ago.
(ii) The number calculated in (i) is subtracted from an ideal number of clock periods per rotation to obtain the error value. The ideal number of clock periods is a function of both the rotational speed of the SDA **16** and the period of the clock **82**. For example, if the SDA ideally rotates at 5400 RPM (90 Hz), the ideal number of 1-MHz clock periods per rotation is 11,111.

After the error value is calculated, the microprocessor **72** in step **96** loads into the latch **80** the sum or difference (depending on the polarity of the error value) between the high byte of the accumulator and the error value. This of course represents an instantaneous phase correction of the SDA **16**. This number is converted to a voltage on the signal ICMD by the ladder network **84.** The amplifiers **77** then adjust the currents on MOTOR COIL<3:1> until ISENSE equals ICMD. In particular, if the calculated error value is positive, the SDA **16** is rotating too fast. In this case, the magnitude of the currents on MOTOR COIL<3:1> are decreased. The opposite happens if the error value is negative.

In step **98**, the microprocessor **72** adds or subtracts the error value (depending on its polarity) to or from the accumulator. The result of this operation may alter the high byte of the accumulator, and therefore may affect the correction applied during the next revolution.

In step **100,** the microprocessor **72** replaces the table entry corresponding to the present commutation with the new sample obtained in step **92**, to be used in the next revolution of the SDA **16**.

The steps shown in Figure **8**, then, enable the spindle controller **18** to control the rotational frequency of the SDA **16**. The spindle controller **18** also carries out additional functions to phase lock the rotation of the SDA **16** to the signal SPC REF. This capability contributes to the synchronization of multiple disk drives in accordance with the principles of the invention.

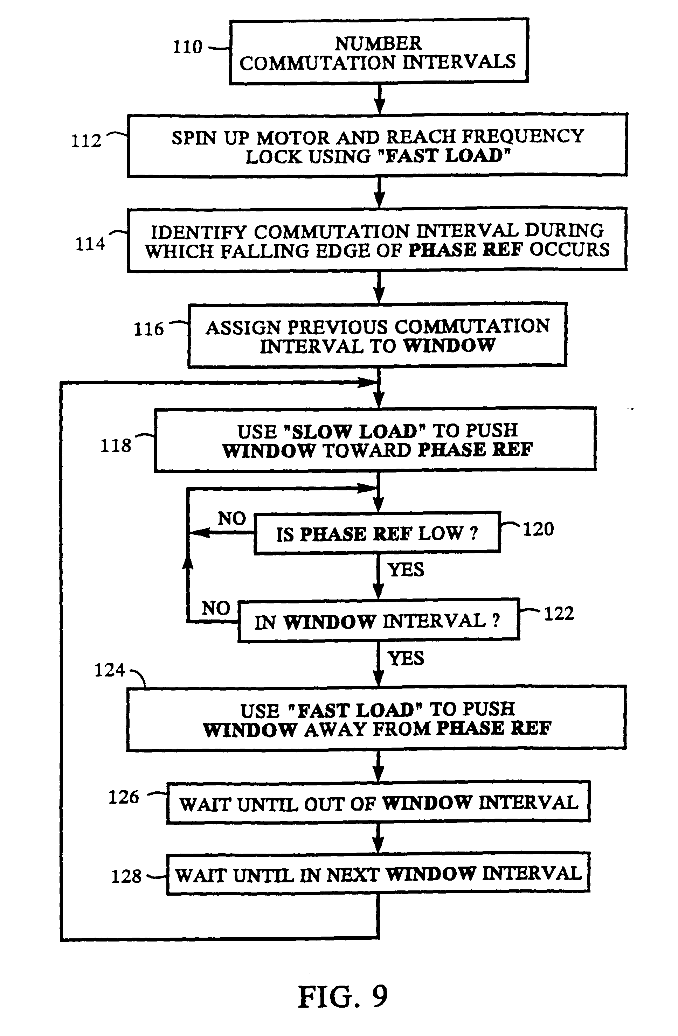

The details of the phase locking operation are shown in Figure **9**. Two slightly different "ideal" rotational period values are chosen. These values are called FAST LOAD and SLOW LOAD, and correspond to frequencies that are respectively higher and lower than the nominal frequency of the signal SPC REF. For example, the values 11,107 and 11,115 may be used for FAST LOAD and SLOW LOAD, respectively. These values correspond to the frequencies 90.033 Hz and 89.969 Hz. The microprocessor **72** monitors the SPC REF signal, and switches between the two frequencies in a fashion that maintains phase alignment between the SDA **16** and the signal SPC REF.

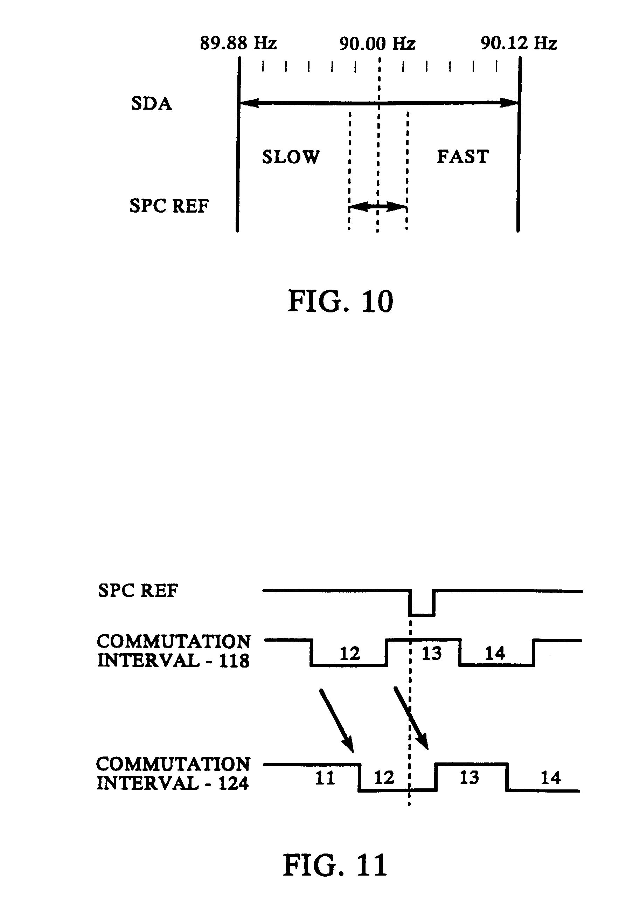

The values of FAST LOAD and SLOW LOAD dictate the boundaries of the range of average frequencies at which the SDA **16** can operate. This range, as shown in Figure **10**, should be broader than the frequency tolerance of the signal SPC REF, and narrower than the rotational frequency tolerance of the SDA 16. In this way it is possible for the spindle controller **18** to track the phase of the signal SPC REF without exceeding the specified rotational frequency limits of the SDA **16**.

Returning to Figure **9**, the phase locking operation of the circuitry of Figure **7** will now be described. In Figure **9**, the term "commutation interval" is used to mean the interval between two successive ones of the 24 commutations per revolution of the SDA **16**. At step **110**, the microprocessor **72** assigns the numbers 1 to 24 to sequential commutation intervals, starting at an arbitrary commutation interval; this numbering is thereafter maintained. At step **112**, the SDA **16** is spun up, using the FAST LOAD value, until its rotational frequency is within the operating range shown in Figure **10**. Then at step **114**, the microprocessor **72** seeks the falling edge of the signal SPC REF, and identifies the commutation interval in which it occurs. In step **116**, the commutation interval immediately preceding the noted commutation interval is designated as a "window" commutation interval. For example, if the falling edge of the signal SPC REF occurs during the 13th commutation interval of the rotation, then the 12th commutation interval is designated as the window commutation interval.

At the end of step **116**, then, a window phase interval of rotation of the SDA **16** has been established. At the beginning of step **118**, the approximate phase of the SDA **16** relative to the signal SPC REF is indicated by the line "COMMUTATION INTERVAL - 118" in Figure **11**. Note that Figure **11** follows the above example wherein interval 12 is assigned as the window interval. This window interval is used in the remaining steps to establish and maintain phase lock.

At step **118** of Figure **9**, the microprocessor **72** switches to the SLOW LOAD value. This of course has the effect of slowing the SDA **16** down, and in particular pushes the window interval toward the falling edge of the signal SPC REF. In steps **120** and **122** the microprocessor **72** waits until the SDA **16** has slowed sufficiently so that the falling edge of the signal SPC REF occurs in the window interval; this may take anywhere from one to many revolutions of the SDA **16**. This "sliding" of the commutation intervals relative to the signal SPC REF is indicated by the arrows in Figure **11**. At the beginning of step **124**, the approximate phase of the SDA **16** is indicated by the line "COMMUTATION INTERVAL - 124" in Figure **11**. Then in step **124** the microprocessor **72** switches back to the FAST LOAD value, and in steps **126** and **128** it waits one revolution of the SDA **16** before repeating the whole procedure starting at step **118**.

The algorithm of Figure **9** controls the phase of the SDA **16** such that it tracks the phase of the signal SPC REF. It does this by switching between higher and lower frequencies, using FAST LOAD and SLOW LOAD, such that an edge of the signal SPC REF occurs at least once in every repetition of the steps **118 - 128**, which in general takes 2 or more revolutions of the SDA **16**. Phase lock is maintained by varying the proportion of high- to low-frequency operation in a manner responsive to the signal SPC REF.

Although in the illustrated embodiment the microprocessor **72** waits one revolution before repeating the steps of Figure **9**, it may in alternative embodiments wait any predetermined number of revolutions. However, one revolution is preferred because it minimizes the spacing between samples of the signal SPC REF, and therefore generally yields better phase tracking.

It will be readily seen by one skilled in the art that the above-described phase locking technique could be altered in many ways to provide similar functionality. For example, the use of FAST LOAD and SLOW LOAD could be switched around, so that the window interval approaches the edge of SPC REF when the SDA 16 is speeding up rather than slowing down. In such a case, step **116** would be altered to assign the succeeding interval rather than the previous interval. It is also easy to change steps **120** and **122** to seek the rising edge of SPC REF if that were advantageous.

It should be noted that the above-described method differs sharply from conventional phase-locking techniques. Traditional techniques generally detect and correct for both positive and negative phase excursions of the controlled signal relative to the reference. In contrast, a phase-locking technique in accordance with the principles of the invention merely detects phase coincidence, and is able to switch between higher and lower frequencies so that phase coincidence occurs once in a while. Such a technique is therefore easily incorporated into existing control systems that for whatever reason already have means for detecting phase coincidence. Additionally, the technique can enhance fault tolerance, because the SDA **16** can be made to always operate within its specified frequency limits. If the SPC REF signal were to become corrupted or to disappear entirely, the worst that would happen is that phase lock would not be maintained: the spindle would still rotate at either the higher or lower frequency, both of which can be programmed to fall within the SDA's specified frequency limits. Furthermore, normal disk activity can proceed entirely independently of phase-lock activity, so that the practice of the invention does not delay the starting of disk accesses.

## Claims

1. A method of phase-locking the rotation of a motorised spindle to a reference signal, comprising the steps of:
establishing a window phase interval of rotation of said spindle (116); wherein said establishing step comprises the steps of:
operating said spindle at a frequency greater than the frequency of said reference signal (124);
identifying a commutation interval during which a falling edge of said reference signal occurs (114); and
designating as said window phase interval the commutation interval preceding the identified commutation interval (116);
determining whether a transition of said reference signal occurs during said window phase interval (122); and
switching the rotational frequency of said spindle between less than the frequency of said reference signal (118) and the frequency greater than the frequency of said reference signal (124) such that a transition of said reference signal occurs during said window phase interval in at least one but not all of a number of revolutions of said spindle.

2. A method according to claim 1, wherein said determining step (122) comprises the steps of:
determining whether said reference signal is de-asserted; and
determining whether the rotational position of said spindle is within said window phase interval if said reference signal is de-asserted.

3. A method according to claim 1, wherein said switching step comprises the steps of:
operating said spindle at said lesser frequency (118) until a transition of said reference signal occurs during said window phase interval (122);
switching the rotational frequency of said spindle to said lesser frequency;
waiting one revolution of said spindle after said switching step (126); and
switching a rotational frequency of said spindle to said frequency less than the frequency of said reference signal.

4. A spindle controller to phase-lock the rotation of a motorised spindle to a reference signal; comprising:
amplifiers (77) to generate at respective outputs motor coil current signals proportional to a signal indicating desired spindle current;
means (70,84) for controlling the value of said spindle current indicaitng signal such that said spindle rotates at a desired rotational frequency;
means for establishing (116) a window phase interval of rotation of said spindle arranged to operate said spindle at a frequency greater than the frequency of said reference signal, identify a commutation interval during which a falling edge of said reference signal occurs, and designate as said window phase interval the commutation interval preceding the identified commutation interval;
means for determining (122) whether a transition of a reference signal occurs during said window phase interval; and
means for switching said desired rotational frequency between a frequency less than the frequency of said reference signal (118) and the frequency greater than the frequency of said reference signal (124) such that a transition of said reference signal occurs during said window phase interval in at least one but not all of a number of revolutions of said spindle.

5. A spindle controller according to claim 4, wherein said controlling means comprises a sensorless commutator (71).

6. A spindle controller according to claim 4, wherein said controlling means comprises a sensored commutator (71).

## Patentansprüche

1. Verfahren zur Phasenverriegelung der Drehung einer motorisierten Spindel mit einem Referenzsignal, umfassend die Schritte:
Erstellen eines Fenster-Phasenintervalls der Drehung der Spindel (116), wobei der Schritt des Erstellens die Schritte umfaßt:
Betreiben der Spindel mit einer Frequenz, die größer ist als die Frequenz des Referenzsignals (124);
Auffinden eines Kommutierungsintervalls, während dem eine abfallende Flanke des Referenzsignals auftritt (114), und
Bestimmen des dem aufgefundenen Kommutierungsintervall vorangehenden Intervalls als Fenster-Phasenintervall (116);
Feststellen, ob ein Übergang des Referenzsignals während des Fenster-Phasenintervalls auftritt (122), und
Umschalten der Drehfrequenz der Spindel zwischen einer Frequenz, die geringer ist als die Frequenz des Referenzsignals (118), und der Frequenz, die größer ist als die Frequenz des Referenzsignals (124), derart, daß ein Übergang des Referenzsignals während des Fenster-Phasenintervalls in wenigstens einer, jedoch nicht allen Umdrehungen einer Anzahl von Umdrehungen der Spindel auftritt.

2. Verfahren nach Anspruch 1, worin der Schritt des Feststellens (122) die Schritte umfaßt:
Feststellen, ob das Referenzsignal gestört ist, und
Feststellen, ob die Drehposition der Spindel innerhalb des Fenster-Phasenintervalls liegt, wenn das Referenzsignal gestört ist.

3. Verfahren nach Anspruch 1, worin der Schritt des Umschaltens die Schritte umfaßt:
Betreiben der Spindel mit der geringeren Frequenz (118), bis ein Übergang des Referenzsignals während des Fenster-Phasenintervalls (122) auftritt,
Umschalten der Drehfrequenz der Spindel auf die geringere Frequenz,
Abwarten einer Umdrehung der Spindel nach dem Schritt des Umschaltens (126) und
Umschalten einer Drehfrequenz der Spindel auf die Frequenz, die kleiner ist als die Frequenz des Referenzsignals.

4. Spindelsteuerung zur Phasenverriegelung der Drehung einer motorisierten Spindel mit einem Referenzsignal, umfassend:
Verstärker (77) zur Erzeugung von Motorspulenstromsignalen, welche zu einem einen gewünschten Spindelstrom angebenden Signal proportional sind, und zwar an entsprechenden Ausgängen,
eine Einrichtung (70, 84) zur Steuerung des Werts des den Spindelstrom angebenden Signals derart, daß die Spindel mit einer gewünschten Drehfrequenz dreht,
eine Einrichtung zum Erstellen (116) eines Fenster-Phasenintervalls der Drehung der Spindel, welche Einrichtung dazu ausgebildet ist, die Spindel bei einer Frequenz zu betreiben, die größer ist als die Frequenz des Referenzsignals, ein Kommutierungsintervall aufzufinden, während dem eine abfallende Flanke des Referenzsignals auftritt, und ein dem aufgefundenen Kommutierungsintervall vorangehendes Kommutierungsintervall als Fenster-Phasenintervall zu bestimmen,
eine Einrichtung zum Feststellen (122), ob ein Übergang eines Referenzsignals während des Fenster-Phasenintervalls auftritt, und
eine Einrichtung zum Umschalten der gewünschten Drehfrequenz zwischen einer Frequenz, die kleiner ist als die Frequenz des Referenzsignals (118), und der Frequenz, die größer ist als die Frequenz des Referenzsignals (124), derart, daß ein Übergang des Referenzsignals während des Fenster-Phasenintervalls in wenigstens einer, jedoch nicht allen Umdrehungen einer Anzahl von Umdrehungen der Spindel auftritt.

5. Spindelsteuerung nach Anspruch 4, worin die Steuereinrichtung einen sensorfreien Kommutator (71) umfaßt.

6. Spindelsteuerung nach Anspruch 4, worin die Steuereinrichtung einen mit einem Sensor versehenen Kommutator (71) umfaßt.

## Revendications

1. Procédé d'asservissement de la phase de la rotation d'un axe motorisé à un signal de référence, comprenant les étapes consistant à :
◆ établir un intervalle de phase de fenêtres de rotation dudit axe [116] ;
◆ dans lequel ladite étape d'établissement comprend les étapes consistant à :
• faire fonctionner ledit axe à une fréquence supérieure à la fréquence dudit signal de référence [124] ;
• identifier un intervalle de commutation pendant lequel un front descendant dudit signal de référence apparaît [114] ; et
• désigner comme dit intervalle de phase de fenêtres l'intervalle de commutation qui précède l'intervalle de commutation identifié [116] ;
◆ déterminer si une transition dudit signal de référence apparaît pendant ledit intervalle de phase de fenêtres [122] ; et
◆ commuter la fréquence rotationnelle dudit axe entre moins que la fréquence dudit signal de référence [118] et la fréquence supérieure à la fréquence dudit signal de référence [124] de manière à ce qu'une transition dudit signal de référence apparaît pendant ledit intervalle de phase de fenêtres dans au moins un, mais pas l'ensemble, des tours d'un certain nombre de nombre de tours dudit axe.

2. Procédé selon la revendication 1, dans lequel ladite étape de détermination [122] comprend les étapes consistant à :
◆ déterminer si ledit signal de référence n'est plus positionné ; et
◆ déterminer si la position rotationnelle dudit axe se trouve à l'intérieur dudit intervalle de phase de fenêtres si ledit signal de référence n'est plus positionné.

3. Procédé selon la revendication 1, dans lequel ladite étape de commutation comprend les étapes consistant à :
◆ faire fonctionner ledit axe à ladite fréquence moindre [118] jusqu'à ce qu'une transition dudit signal de référence apparaisse pendant ledit intervalle de phase de fenêtres [122] ;
◆ commuter la fréquence rotationnelle dudit axe à ladite fréquence moindre ;
◆ attendre un tour dudit axe après ladite étape de commutation [126] ; et
◆ commuter une fréquence rotationnelle dudit axe à ladite fréquence inférieure à la fréquence dudit signal de référence.

4. Contrôleur d'axe pour asservir en phase la rotation d'un axe motorisé à un signal de référence, comprenant :
◆ des amplificateurs [77] destinés à générer sur des sorties respectives des signaux de courant de bobine de moteur proportionnels à un signal indiquant le courant d'axe désiré ;
◆ des moyens [70, 84] pour commander la valeur dudit courant d'axe indiquant un signal tel que ledit axe tourne à une fréquence rotationnelle désirée ;
◆ des moyens pour établir [116] un intervalle de phase de fenêtres de rotation dudit axe, agencés pour faire fonctionner ledit axe à une fréquence supérieure à la fréquence dudit signal de référence, identifier un intervalle de commutation pendant lequel un front descendant dudit signal de référence apparaît et désigner comme dit intervalle de phase de fenêtres l'intervalle de commutation qui précède l'intervalle de commutation identifié ;
◆ des moyens pour déterminer [122] si une transition d'un signal de référence apparaît pendant ledit intervalle de phase de fenêtres ; et
◆ des moyens pour commuter ladite fréquence rotationnelle désirée entre une fréquence inférieure à la fréquence dudit signal de référence [118] et la fréquence supérieure à la fréquence dudit signal de référence [124] de manière à ce qu'une transition dudit signal de référence apparaît pendant ledit intervalle de phase de fenêtres dans au moins un, mais pas l'ensemble, d'un certain nombre de tours dudit nombre de tours dudit axe.

5. Contrôleur d'axe selon la revendication 4, dans lequel lesdits moyens de commande comprennent un commutateur sans détecteur [71].

6. Contrôleur d'axe selon la revendication 4, dans lequel lesdits moyens de commande comprennent un commutateur avec détecteur [71].
